# EUROPÄISCHE PATENTANMELDUNG

(11) **EP 2 787 413 A1**
(43) Veröffentlichungstag der Anmeldung: **08.10.2014**
(21) Anmeldenummer: 13162550.1
(22) Anmeldetag: 05.04.2013
(51) Int. Cl.: G06F 1/30

(54) **Unterbrechungsfreie Stromversorgung**

(71) Anmelder: Siemens Aktiengesellschaft, 80333 München (DE)
(72) Erfinder: Allahut, Gerd Reinhard, 91171 Greding (DE); Schmidt, Hans-Klaus, 90579 Langenzenn (DE)

(57) **Zusammenfassung**

Die Erfindung betrifft eine unterbrechungsfreie Stromversorgung (1), umfassend ein Basisgerät (2), ein Batteriemodul (3) und eine Kommunikationsschnittstelle (4) zur Konfiguration des Basisgerätes () ausgestaltet um bei Störungen in einer Versorgungsspannung für elektrische Verbraucher die Versorgung der elektrischen Verbraucher sicherzustellen. Erfindungsgemäß ist vorgesehen, dass die Kommunikationsschnittstelle (4) für eine Kommunikation über einen Feldbus (5) mit einem Projektentwicklungssystem (20) ausgestaltet ist, wobei die Kommunikationsschnittstelle (4) mit einem Mikroprozessor (6) verbunden ist, weiterhin weist der Mikroprozessor (6) einen Feldbuscontroller (7) ausgestaltet mit einem Feldbusprotokoll (8) zur Kommunikation mit dem Projektentwicklungssystem (20) bezüglich einer Steuerung oder Diagnose des Basisgerätes (2) auf, wobei das Basisgerät (2) einen Speicherbaustein (9) mit einer Gerätestammdatendatei (10) aufweist.

## Beschreibung

Die Erfindung betrifft eine unterbrechungsfreie Stromversorgung, umfassend ein Basisgerät, ein Batteriemodul und eine Kommunikationsschnittstelle zur Konfiguration des Basisgerätes ausgestaltet, um bei Störungen in einer Versorgungsspannung für elektrische Verbraucher die Versorgung der elektrischen Verbraucher sicherzustellen.

Bei bekannten unterbrechungsfreien Stromversorgungen existiert bereits eine Kommunikationsschnittstelle um an diese beispielsweise ein Programmiergerät anzuschließen und die unterbrechungsfreie Stromversorgung für die Bedürfnisse eines Anlagenbetreibers mit dem Programmiergerät zu konfigurieren.

Aufgabe der vorliegenden Erfindung ist es, eine unterbrechungsfreie Stromversorgung bereitzustellen, bei welcher eine Konfiguration erleichtert wird.

Die Aufgabe wird bei der unterbrechungsfreien Stromversorgung, umfassend ein Basisgerät, ein Batteriemodul und eine Kommunikationsschnittstelle zur Konfiguration des Basisgerätes ausgestaltet, um bei Störungen in einer Versorgungsspannung für elektrische Verbraucher die Versorgung der elektrischen Verbraucher sicherzustellen, dadurch gelöst, dass die Kommunikationsschnittstelle für eine Kommunikation über einen Feldbus mit einem Projektentwicklungssystem ausgestaltet ist, wobei die Kommunikationsschnittstelle mit einem Mikroprozessor verbunden ist. Weiterhin weist der Mikroprozessor einen Feldbuscontroller, ausgestaltet mit einem Feldbusprotokoll zur Kommunikation mit dem Projektentwicklungssystem bezüglich einer Steuerung oder Diagnose des Basisgerätes auf, wobei das Basisgerät einen Speicherbaustein mit einer Gerätestammdatendatei aufweist.

Bisher war es das Problem, dass beispielsweise eine unterbrechungsfreie Stromversorgung für Gleichspannung (DC-USV) in einer zu automatisierenden industriellen Anlage nicht datentechnisch an den zu automatisierenden Prozess bzw. an einen Leitrechner angeschlossen war. Damit kann sie weder aus der Ferne konfiguriert noch gesteuert werden. Eine über einen Feldbus kommunikationsfähige unterbrechungsfreie Stromversorgung kann sich in einer zu automatisierenden Anlage voll integrieren und mit allen am Feldbus angeschlossenen Geräten kommunizieren und Datenverkehr betreiben. Mit einer derartigen unterbrechungsfreien Stromversorgung kann diese auch über ein Projektentwicklungssystem aus der Ferne konfiguriert werden. Es ist nunmehr nicht mehr notwendig, dass ein Anlagenbetreiber mit einem Programmiergerät direkt an der unterbrechungsfreien Stromversorgung die Konfiguration der unterbrechungsfreien Stromversorgung vornimmt. Eine Konfiguration mit dem Projektentwicklungssystem wird durch eine Gerätestammdatendatei unterstützt. Die Gerätestammdatendatei ist in dem Basisgerät in einem Speicherbaustein integriert. In einer Gerätestammdatendatei sind charakteristische Kommunikationsmerkmale des Gerätes, insbesondere in Bezug auf einen Feldbus, beispielsweise einem Profibus oder einem Profinet, hinterlegt. Die Gerätestammdatendateien erweitern eine offene Kommunikation bis in eine Bedienebene.

In einer weiterführenden Ausgestaltung ist die unterbrechungsfreie Stromversorgung mit einem Seitenspeicherbaustein, welcher für eine Bereitstellung von HTML- oder Bild-Dateien oder dynamisch erzeugten Dateien über den Feldbuscontroller an die Kommunikationsschnittstelle ausgestaltet ist, versehen. Durch die Bereitstellung von HTML-Dateien, beispielsweise eines Fotos des Basisgerätes, kann dieses Foto über den Feldbus an das Projektentwicklungssystem übertragen werden und in einer Projektansicht angezeigt werden. Ein Projekteur der unterbrechungsfreien Stromversorgung sieht nun ein fotorealistisches Bild der unterbrechungsfreien Stromversorgung und kann durch eine Bedienhandlung an dem Bild, beispielsweise einem Doppelklick, in ein Eigenschaftsmenü zur Konfiguration der unterbrechungsfreien Stromversorgung gelangen. Bei einer Projektierung bzw. Konfiguration der unterbrechungsfreien Stromversorgung wird ein Projekteur durch die Gerätestammdatendatei, welche ebenfalls über den Feldbus übertragen wurde, unterstützt. Dabei beschreibt die Gerätestammdatendatei die Merkmale des Basisgerätes in einem genau festgelegten Format.

Von besonderem Vorteil ist es, wenn der Feldbuscontroller als ein Ethernet-Controller ausgestaltet ist.

Weiterhin ist es von Vorteil, wenn die unterbrechungsfreie Stromversorgung einen Batterieüberwachungsbaustein aufweist, welcher ausgestaltet ist, eine Ladespannung des Batteriemoduls zu überwachen und bei einer Unterschreitung der Ladespannung unter eine vorgebbare Grenzspannung ein Statussignal über die Kommunikationsschnittstelle auszugeben. Dieses Statussignal kann wiederum über den Feldbus an das Projektentwicklungssystem oder einen Leitrechner gelangen und so kann frühzeitig einem Betreiber der Anlage ein Hinweis auf die Ladespannung des Batteriemoduls gegeben werden.

Vorteilhafterweise ist die unterbrechungsfreie Stromversorgung ausgestaltet für eine 24 V-Gleichspannungsversorgung der elektrischen Verbraucher.

Die eingangs genannte Aufgabe wird auch durch eine Vorrichtung gelöst, umfassend eine unterbrechungsfreie Stromversorgung nach einem der Ansprüche 1 bis 6, weiterhin aufweisend einen Feldbus, ein Projektentwicklungssystem, wobei das Basisgerät mit dem Projektentwicklungssystem über den Feldbus verbunden ist, das Projektentwicklungssystem ist dabei ausgestaltet, in einer Projektansicht die über den Feldbus angeschlossene unterbrechungsfreie Stromversorgung anzeigen zu lassen und zu konfigurieren, zu steuern oder zu diagnostizieren.

Die Zeichnung zeigt ein Ausführungsbeispiel, dabei zeigt die
- FIG 1: eine unterbrechungsfreie Stromversorgung in einer Prinzipdarstellung und die
- FIG 2: eine Vorrichtung mit einer unterbrechungsfreien Stromversorgung und einem Projektentwicklungssystem.

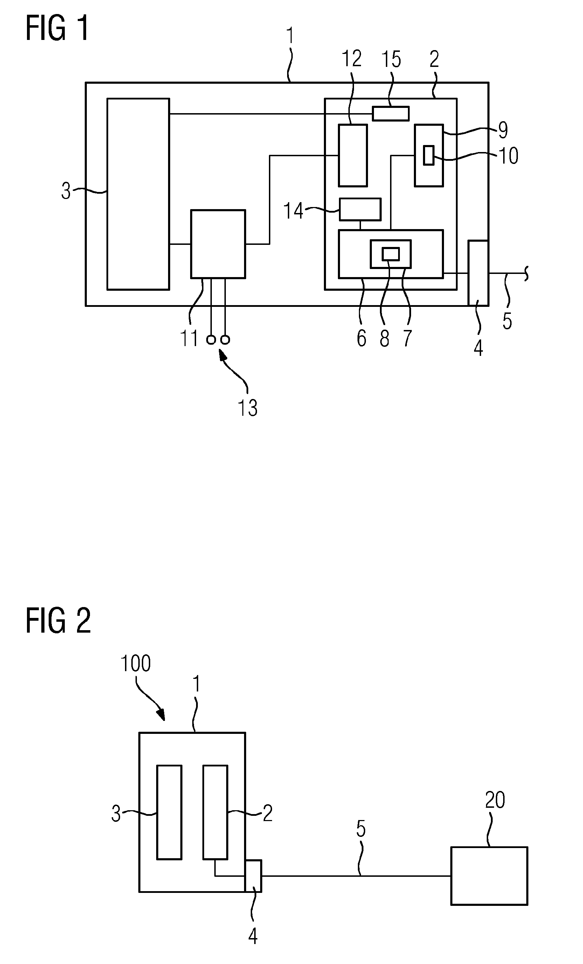

Gemäß FIG 1 ist eine unterbrechungsfreie Stromversorgung 1 dargestellt. Die unterbrechungsfreie Stromversorgung 1 umfasst ein Basisgerät 2, ein Batteriemodul 3 und eine Kommunikationsschnittstelle 4. Die bisher bekannten unterbrechungsfreien Stromversorgungen waren derart ausgestaltet, dass die Kommunikationsschnittstelle lediglich zur Konfiguration des Basisgerätes 2 vor Ort ausgestaltet war. Mit der gemäß FIG 1 dargestellten unterbrechungsfreien Stromversorgung 1 ist die Kommunikationsschnittstelle 4 nun für eine Kommunikation über einen Feldbus 5 mit einem Projektentwicklungssystem 20 (siehe FIG 2) ausgestaltet. Dazu ist die Kommunikationsschnittstelle 4 mit einem Mikroprozessor 6 verbunden. Der Mikroprozessor 6 weist für die Kommunikation über den Feldbus 5 einen Feldbuscontroller 7 auf. In dem Feldbuscontroller 7 ist ein Feldbusprotokoll 8 zur Kommunikation mit dem Projektentwicklungssystem 20 bezüglich einer Steuerung oder Diagnose des Basisgerätes 2 implementiert. Als Feldbusprotokoll 8 wird das Profinet-Protokoll verwendet. Das bedeutet, dass der Feldbuscontroller 7 als ein Ethernet-Controller ausgestaltet ist.

Das Basisgerät 2 weist einen Speicherbaustein 9 mit einer Gerätestammdatendatei 10 auf. Die Gerätestammdatendatei 10 kann mittels des Feldbuscontrollers 7 über den Feldbus 5 an das Projektentwicklungssystem 20 gesendet werden und unterstützt einen Projekteur dadurch bei der Konfiguration des Basisgerätes 2.

Um bei einer Störung in einer Versorgungsspannung für elektrische Verbraucher die Versorgung der elektrischen Verbraucher sicherzustellen, weist die unterbrechungsfreie Stromversorgung eine Anschaltvorrichtung 11 auf. Die Anschaltvorrichtung 11 weist wiederum Versorgungsspannungsanschlüsse 13 auf. An diese Versorgungsspannungsanschlüsse 13 sind die elektrischen Verbraucher angeschlossen. Über das Batteriemodul 3 und die Anschaltvorrichtung 11 kann bei einem Ausfall der Versorgungsspannung nun eine Batteriespannung über die Versorgungsspannungsanschlüsse 13 für die elektrischen Verbraucher bereitgestellt werden. Eine Steuervorrichtung 12 steuert diese Bereitstellung.

Um eine Konfiguration, ein Steuern oder eine Diagnose der unterbrechungsfreien Stromversorgung für einen Projekteur am Projektentwicklungssystem 20 zu erleichtern, weist das Basisgerät 2 einen Seitenspeicherbaustein 14 auf, welcher für eine Bereitstellung von HTML- oder Bild-Dateien oder dynamisch erzeugten Dateien über den Feldbuscontroller 7 an die Kommunikationsschnittstelle 4 ausgestaltet ist. Durch das Bereitstellen von beispielsweise Bild-Dateien des Seitenspeicherbaustein, welcher auch als eine Art Web-Server bezeichnet werden kann, wird bei dem Projektentwicklungssystem 20 eine vollgrafische Projektierung der unterbrechungsfreien Stromversorgung 1 anhand von fotorealistischen Geräte- und Modulabbildungen möglich. Ein Eintragen einer Konfigurationsdatei in die unterbrechungsfreie Stromversorgung 1 kann nunmehr mit dem Projektentwicklungssystem 20 über den Feldbus 5 geschehen. Auch sind online-Funktionen mit dem Projektentwicklungssystem 20 möglich, beispielsweise kann in dem Projektentwicklungssystem 20 mittels der in dem Basisgerät 2 integrierten Batterieüberwachungsbausteins 15 der Batterieladezustand des Batteriemoduls 3 beobachtet werden.

Gemäß der FIG 2 ist eine Vorrichtung 100 umfassend die unterbrechungsfreie Stromversorgung 1, welche über die Kommunikationsschnittstelle 4 an den Feldbus 5 mit dem Projektentwicklungssystem 20 verbunden ist, dargestellt. Mit dem über den Feldbus 5 angeschlossenen Projektentwicklungssystem 20 kann in einer Projektansicht des Projektentwicklungssystems 20 die unterbrechungsfreie Stromversorgung 1 bzw. ihr Basisgerät 2 angezeigt werden und es kann durch einen Projekteur konfiguriert, gesteuert oder diagnostiziert werden.

## Patentansprüche

1. Unterbrechungsfreie Stromversorgung (1), umfassend ein Basisgerät (2), ein Batteriemodul (3) und eine Kommunikationsschnittstelle (4) zur Konfiguration des Basisgerätes (2) ausgestaltet um bei Störungen in einer Versorgungsspannung für elektrische Verbraucher die Versorgung der elektrischen Verbraucher sicherzustellen,
**dadurch gekennzeichnet, dass** die Kommunikationsschnittstelle (4) für eine Kommunikation über einen Feldbus (5) mit einem Projektentwicklungssystem (20) ausgestaltet ist, wobei die Kommunikationsschnittstelle (4) mit einem Mikroprozessor (6) verbunden ist, weiterhin weist der Mikroprozessor (6) einen Feldbuscontroller (7) ausgestaltet mit einem Feldbusprotokoll (8) zur Kommunikation mit dem Projektentwicklungssystem (20) bezüglich einer Steuerung oder Diagnose des Basisgerätes (2) auf, wobei das Basisgerät (2) einen Speicherbaustein (9) mit einer Gerätestammdatendatei (10) aufweist.

2. Unterbrechungsfreie Stromversorgung (1) nach Anspruch 1 aufweisend einen Seitenspeicherbaustein (14), welcher für eine Bereitstellung von HTML- oder Bild-Dateien oder dynamisch erzeugten Dateien über den Feldbuscontroller (7) an die Kommunikationsschnittstelle (4) ausgestaltet ist.

3. Unterbrechungsfreie Stromversorgung (1) nach Anspruch 2, wobei als Bild-Dateien Fotos des Basisgerätes (2) hinterlegt sind.

4. Unterbrechungsfreie Stromversorgung (1) nach einem der Ansprüche 1 bis 3, wobei der Feldbuscontroller (7) als ein Ethernet-Controller ausgestaltet ist.

5. Unterbrechungsfreie Stromversorgung (1) nach einem der Ansprüche 1 bis 4, aufweisend einen Batterieüberwachungsbaustein (15), welcher ausgestaltet ist eine Ladespannung des Batteriemoduls (3) zu überwachen und bei einer Unterschreitung der Ladespannung unter eine vorgebare Grenzspannung ein Statussignal über die Kommunikationsschnittstelle (4) auszugeben.

6. Unterbrechungsfreie Stromversorgung (1) nach einem der Ansprüche 1 bis 5, ausgestaltet für eine 24 V-Gleichspannungsversorgung der elektrischen Verbraucher.

7. Vorrichtung (100) umfassend eine unterbrechungsfreie Stromversorgung (1) nach einem der Ansprüche 1 bis 6, weiterhin aufweisend einen Feldbus (5), ein Projektentwicklungssystem (20), wobei das Basisgerät (2) mit dem Projektentwicklungssystem (20) über den Feldbus (5) verbunden ist, das Projektentwicklungssystem (20) ist dabei ausgestaltet in einer Projektansicht die über den Feldbus (5) angeschlossene unterbrechungsfreie Stromversorgung (1) anzeigen zu lassen und zu konfigurieren, zu steuern oder zu diagnostizieren.
